# EUROPÄISCHE PATENTSCHRIFT

(11) **EP 0 861 976 B1**
(45) Veröffentlichungstag und Bekanntmachung des Hinweises auf die Patenterteilung: **30.10.2002**
(21) Anmeldenummer: 98103332.7
(22) Anmeldetag: 26.02.1998
(51) Int. Cl.: F02B 75/32, F01B 9/02

(54) **Zahntrieb zur Umsetzung einer linearen Bewegung in eine Drehbewegung, insbesondere für Verbrennungsmotoren**
Gear drive for converting linear motion into rotary motion especially for an internal combustion engine
Train d'engrenage pour la conversion de motion alternative en motion rotative pour un moteur à combustion interne

(30) Priorität: 26.02.1997 DE 19707772
(43) Veröffentlichungstag der Anmeldung: 02.09.1998
(73) Patentinhaber: Hecke, Norbert, Dipl.-Ing., 30161 Hannover (DE); Spreckelmeyer, Walter, Dr., 30173 Hannover (DE); Backhaus, Wolfram, 30655 Hannover (DE)
(72) Erfinder: Hecke, Norbert, Dipl.-Ing.,, 30161 Hannover (DE)
(74) Vertreter: Seewald, Jürgen, Dipl.-Ing.

(56) Entgegenhaltungen:
- DE-A- 3 230 508
- US-A- 4 608 951
- US-A- 4 803 964
- US-A- 4 813 387
- US-A- 5 351 566

## Beschreibung

Die vorliegende Erfindung betrifft einen kurbeltrieblosen Verbrennungsmotor gemäß dem Oberbegriff des Anspruchs 1. Der Erfindungsgegenstand ist darüber hinaus z.B. auch bei hydraulischen und pneumatischen Hubkolbenmotoren anwendbar.

Aus der US 4,803,964 ist ein derartiger kurbeltriebloser Verbrennungsmotor bekannt. Bei diesem Motor besteht die Führung aus einem unterhalb des Kraftübertragungsgliedes angeordneten Führungsblock mit mindestens einer geschlossenen Führungsbahn, in der ein Roll- oder Gleitkörper läuft, der am unteren Ende des Kraftübertragungsgliedes gelagert ist. Aufgrund dieser Anordnung ist die Bauhöhe dieses bekannten Motors relativ hoch. Des weiteren bereitet diese Art der Führung Probleme beim Durchlaufen des oberen und unteren Totpunktes.

Aufgabe der vorliegenden Erfindung ist es, einen weiteren gattungsgemäßen kurbeltrieblosen Verbrennungsmotor mit verbesserter Führung seines Kraftübertragungsgliedes zur Verfügung zu stellen. Diese Aufgabe wird erfindungsgemäß mit einem Verbrennungsmotor gelöst, der die Merkmale des Anspruchs 1 aufweist.

Die drei an dem konzentrisch zur Motorwelle angeordneten, im Motorblock kugelgelagerten Ring befestigten Gleit- bzw. Rollkörper umkreisen das auf der Motorwelle sitzende Zahnrad immer im gleichen Abstand und führen das auslenkbare Ende des Pleuels so, daß ein fast spielfreier Zahneingriff mit dem ovalen Innenzahnrad erfolgt. Des weiteren ist die geschlossene Führungsbahn in das Kraftübertragungsglied integriert, so daß sich die Bauhöhe des Motors verringert.

Nach der vorliegenden Erfindung entfällt des weiteren bei einem Hubkolbenmotor der Kurbeltrieb mit seiner ungünstigen Krafteinwirkung auf die Kurbelwelle. Statt dessen überträgt ein mit dem Hubkolben verbundenes Pleuel unter einer sehr geringen Auslenkung von + < 2,75° die Kolbenkraft direkt auf eine mehrfachrollen- bzw. kugelgelagerte Zahnradwelle. Durch diese erfindungsgemäße konstruktive Änderung erfolgt eine bis zu ca. 33%ige Leistungssteigerung der Kolbenkraft auf die Motorwelle mit der angeflanschten Schwungscheibe gegenüber dem bisher verwendeten Kurbeltrieb.

Das ovale Innenzahnrad des Pleuels, welches um das zentral gelagerte Zahnrad der Motorwelle zwangsgeführt wird, überträgt unmittelbar nach dem oberen Totpunkt die Kolbenkraft direkt auf den Teilkreis (Teilkreisradius entspricht beim Vergleich dem Kurbelradius beim Kurbeltrieb) des Zahnrades und erzeugt damit ein maximales Drehmoment.

Als Verbesserung ist auch noch zu werten, daß mit der Neuerung bei den heute üblichen Kolbengeschwindigkeiten die Motorwelle mit der Schwungscheibe eine Verdoppelung der üblichen Drehzahl oder bei der halben üblichen Kolbengeschwindigkeit die heute übliche Drehzahl erreichen kann. Letzteres bedeutet einen geringeren Brennstoff- und Ölverbrauch sowie weniger Verschleiß der Kolben-Zylinder-Einheit, was durch geringe Auslenkung des Pleuels noch begünstigt wird.

Weitere vorteilhafte Ausgestaltungen der Erfindung ergeben sich aus den Unteransprüchen.

Die Erfindung wird nachstehend näher erläutert. In der dazugehörigen zeichnung zeigt:
- Fig. 1: einen Längsschnitt durch einen Hubkolben-Verbrennungsmotor mit fünf Zylindern,
- Fig. 2: einen Schnitt A-A gemäß Fig. 1,
- Fig. 3: einen Schnitt B-B gemäß Fig. 1,
- Fig. 4: einen Längsschnitt durch einen Verbrennungsmotor gemäß Fig. 1 mit Aufladung,
- Fig. 5: einen Schnitt C-C gemäß Fig. 4,
- Fig. 6: einen Schnitt D-D gemäß Fig. 4,
- Fig. 7: eine Skizze der Darstellung des Wirkprinzips der Erfindung gemäß Anspruch 2, und
- Fig. 8: eine Vergrößerung E gemäß Fig. 4.

Bei dem in den Figuren dargestellten Hubkolben-Verbrennungsmotor entfällt der Kurbeltrieb mit seiner ungünstigen Krafteinwirkung auf die Kurbelwelle. Statt dessen überträgt ein mit einem Hubkolben 9 verbundenes Pleuel 1 unter einer sehr geringen Auslenkung von + < 2,75° die Kolbenkraft direkt auf ein zentral gelagertes Zahnrad 6, welches auf einer mehrfachrollen- bzw. kugelgelagerten Motorwelle 7 drehfest befestigt ist. Durch diese erfindungsgemäße, konstruktive Änderung der Kraftübertragung von einer linearen Bewegung 2 in eine Drehbewegung erfolgt eine bis zu ca. 33%ige Leistungssteigerung der Kolbenkraft auf die Motorwelle 7 gegenüber dem bisher verwendeten Kurbeltrieb. Bei diesem Vergleich entspricht der Teilkreisradius des zentral gelagerten Zahnrades 6 dem Kurbelradius beim Kurbeltrieb. Das Pleuel 1, welches an seinem einen Ende linear durch den Kolben 9 im Zylinder 10 geführt wird, weist an seinem anderen, auslenkbaren Ende ein ovales Innenzahnrad 3 auf, welches über eine Führung um das auf der Motorwelle 7 zentral gelagerte Zahnrad 6 geführt ist, welches mit dem Innenzahnrad 3 einseitig kämmt und daher in Drehung versetzt wird.

Bei der Führung des Innenzahnrades 3 handelt es sich um Führungsrollen 4, die um das Zahnrad 6 drehend an einem kugelgelagerten Ring 5 befestigt sind. Wie aus der Zeichnung hervorgeht, ist auf jeder Seite des Innenzahnrades 3 eine Führungsbahn 8 vorgesehen, wobei in dieser Führungsbahn 8 jeweils drei relativ dicht nebeneinander angeordnete Führungsrollen 4 laufen, was weiter unten noch ausführlich erläutert wird.

Die Steuerung der Ringe 5 mit den daran gelagerten Führungsrollen 4, und damit auch die genaue Führung des ovalen Innenzahnrades 3, erfolgt selbsttätig durch die in sich geschlossenen Führungsbahnen 8, die außerhalb und parallel zum Innenzahnrad 3 angeordnet sind. Die erste Führungsrolle 4 berührt erst in dem Moment den äußeren Bogen der Führungsbahn 8, wenn die mittlere Führungsrolle 4 den Übergang vom geraden Teil in den äußeren Bogen der Führungsbahn 8 erreicht hat. Dadurch wird der Ring 5 mit den daran befestigten Führungsrollen 4 in den Bogen der Führungsbahn 8 eingeschwenkt, so daß die Zahnpaarung fast spielfrei weiter erfolgt. Nach Austritt der mittleren Führungsrolle aus dem Bogen der Führungsbahn 8 lenkt die erste Führungsrolle 4 den kugelgelagerten Ring 5 wieder in die gerade Führungsbahn 8 und ermöglicht weiterhin eine kraftschlüssige, fast spielfreie Zahnpaarung des ovalen Innenzahnrades 3 und des Zentral-Zahnrades 6. Die Motorwellen-Lagerböcke 16, welche die Wälzlager der Motorwelle 7 und die Ringe 5 halten, sind fest in das Motorwellengehäuse 17 positioniert eingeschraubt.

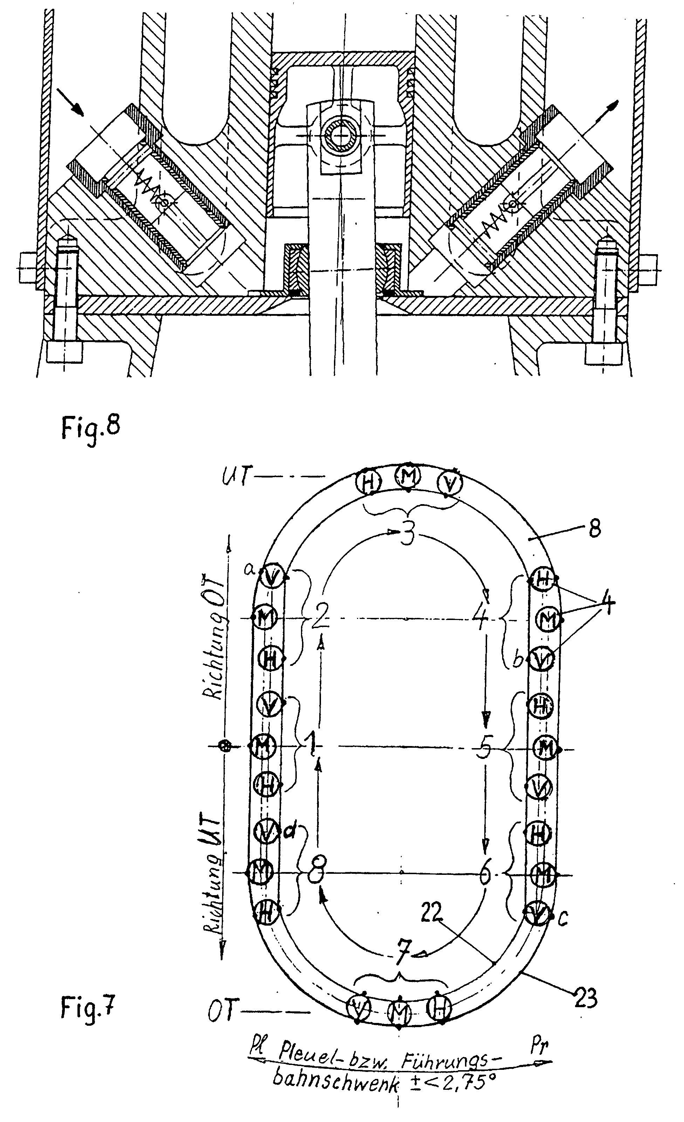

Die obenstehend kurz erläuterte Führung des ovalen Innenzahnrades 3 wird nachstehend anhand der Prinzipskizze gemäß Fig. 7 näher erläutert. Diese zeigt eine Führungsbahn 8 mit einer Innenwandung 22 und einer Außenwandung 23. Dabei ist die Kinematik der auf dem Ring 5 befestigten Führungsrollen 4, welche das zentral gelagerte, auf der Motorwelle 7 sitzende Zahnrad 6 immer im gleichen Abstand (v = konstant) umkreisen können und das auslenkbare Ende des Pleuels 1 so führen, daß ein fast spielfreier Zahneingriff mit dem ovalen Innenzahnrad 3 erfolgt, in ablaufbedingten Positionen 1 bis 8 erklärt.

Die Beschreibung betrifft einen Viertakt-Motor und soll zur Halbzeit des Arbeitstaktes (dritter Takt) mit der Position 1 beginnen. In der Skizze ist mit V die in Laufrichtung vordere, mit M die mittlere und mit H die in Laufrichtung hintere Führungsrolle 4 bezeichnet. Der Kolben 9 sowie auch das Pleuel 1, bzw. das ovale Innenzahnrad 3 bewegen sich um < 2,75° nach rechts geschwenkt dem unteren Totpunkt (UT) entgegen. In der Position 1 liegen die Führungsrollen V und H an der geraden Innenwandung 22 an, während die Führungsrolle M an der geraden Außenwandung 23 anliegt (siehe Berührungspunkte). Bei der weiteren Abwärtsbewegung des Pleuels 1 in Richtung UT wird die Position 2 erreicht. Dort erfolgt beim Wechsel von der geraden Innenwandung 22 in den Kreisbogen der Innenwandung 22 ein Anschlag a der Führungsrolle V an den Kreisbogen der Außenwandung 23, wodurch sich die Führungsrollen VMH sowohl an der Innenwandung 22 und an der Außenwandung 23 anliegend (diametrale Berührungspunkte aller Führungsrollen 4 mit den Wandungen 22, 23 der Führungsbahn 8) zum unteren Totpunkt (UT) bewegen. Dabei ist das auslenkbare Ende des Pleuels 1 in die Mitte (+ 0°) bzw. in die Senkrechte nach links in die Richtung Pl geschwenkt.

Im unteren Totpunkt (UT) bei Position 3 erfolgt eine Bewegungsumkehr in Richtung des oberen Totpunktes (OT) von Pleuel 1 und Kolben 9, wobei die Umkehrkraft durch die 2 x 3-Führungsrollen 4 in die Gegenbewegung umgelenkt wird. Nun gibt die an der Motorwelle 7 angeflanschte Schwungscheibe 21 ihre kinetische Energie über das zentral gelagerte Zahnrad 6 an das auslenkbare Ende des Pleuels 1 bzw. an das ovale Innenzahnrad 3 unter gleichzeitigem Schwenk nach links (Pl) ab, wodurch Kolben 9 und Pleuel 1 sich nach oben dem oberen Totpunkt (OT) entgegen bewegen.

In der Position 4 erfolgt durch den Anschlag b der Führungsrolle V an die gerade Innenwandung 22 das Ende der Drehbewegung des Ringes 5 und der Führungsrollen 4, die dann mit V und H an der geraden Innenwandung 22 und mit M an der geraden Außenwandung 23 (siehe Berührungspunkte) anliegend über den Halb-Zeitpunkt Position 5 des vierten Taktes (Ausstoßen verbrauchter Gase) zur Position 6 gelangen, während das Pleuel 1 und der Kolben 9 dem oberen Totpunkt (OT) entgegenstreben. In der Position 6 erfolgt wieder wie schon in Position 2 der Anschlag c der Führungsrolle V an den Kreisbogen der Außenwandung 23 und die Führungsrollen 4 bewegen sich wieder formschlüssig zwischen der Innenwandung 22 und der Außenwandung 23 der Führungsbahn 8 im Kreisbogen zum oberen Totpunkt (OT), wobei das auslenkbare Ende des Pleuels 1 in die Mitte (+ 0°) bzw. in die Senkrechte nach rechts in die Richtung Pr schwenkt.

Im oberen Totpunkt (OT) bei Position 7 7 erfolgt eine Bewegungsumkehr, und Pleuel 1 und Kolben 5 bewegen sich in Richtung UT, wobei die Umkehrkraft durch die 2 x 3-Führungsrollen 4 in die Gegenbewegung umgelenkt wird. Die an der Motorwelle 7 angeflanschte Schwungscheibe 21 gibt weiterhin die im Arbeitstakt (dritter Takt) erhaltene kinetische Energie wie bisher über das zentral gelagerte Zahnrad 6 an das auslenkbare Ende des Pleuels 1 bzw. an das ovale Innenzahnrad 3 unter gleichzeitigem Schwenk (Pr) nach rechts ab, wodurch der Kolben 9 und das Pleuel 1 sich nach unten, dem unteren Totpunkt (UT) entgegen bewegen.

Wenn das auslenkbare Ende des Pleuels 1 durch die Führung der Führungsrollen 4 weiter nach rechts (Richtung Pr) geschwenkt ist, wird die Position 8 erreicht, und die Führungsrolle V trifft, aus dem Kreisbogen kommend, an der Anschlagstelle d auf die gerade Innenwandung 22. Von da an wird der Ansaughub (erster Takt) vom Kolben 9 und Pleuel 1, welche nach unten, dem unteren Totpunkt (UT) entgegengehen, fortgesetzt. Der weitergehende Ansaughub (erster Takt) geht über die Position 1 in Position 2 zum unteren Totpunkt (UT) in Position 3, womit wieder die Bewegungsrichtung umgekehrt wird, und der Verdichtungshub (zweiter Takt) in Richtung OT eingeleitet wird. Der Verdichtungshub (zweiter Takt) erfolgt weiter über Position 4, Position 5, Position 6 zum oberen Totpunkt OT in Position 7. Ab der Umkehrung der Bewegungsrichtung beginnt der Arbeitshub (dritter Takt), womit sich der Vier-Takt-Ablauf geschlossen hat.

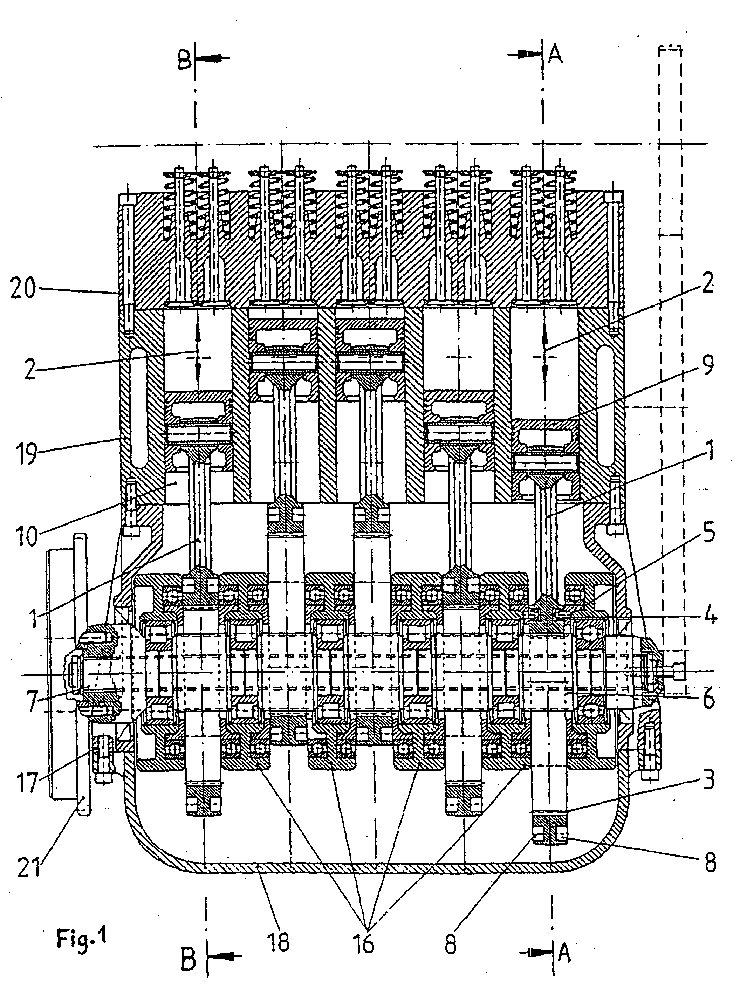

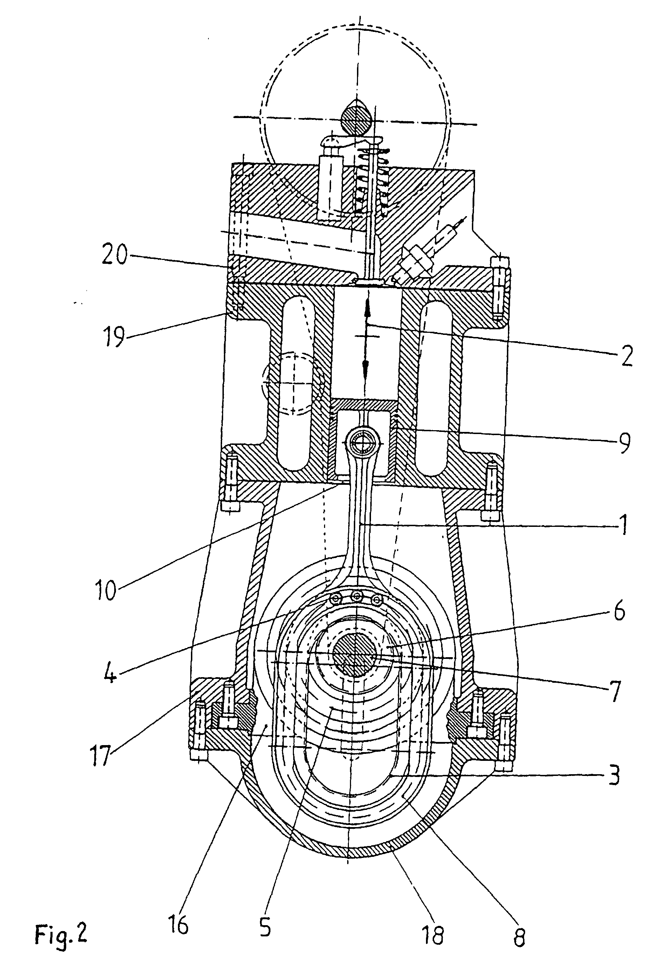

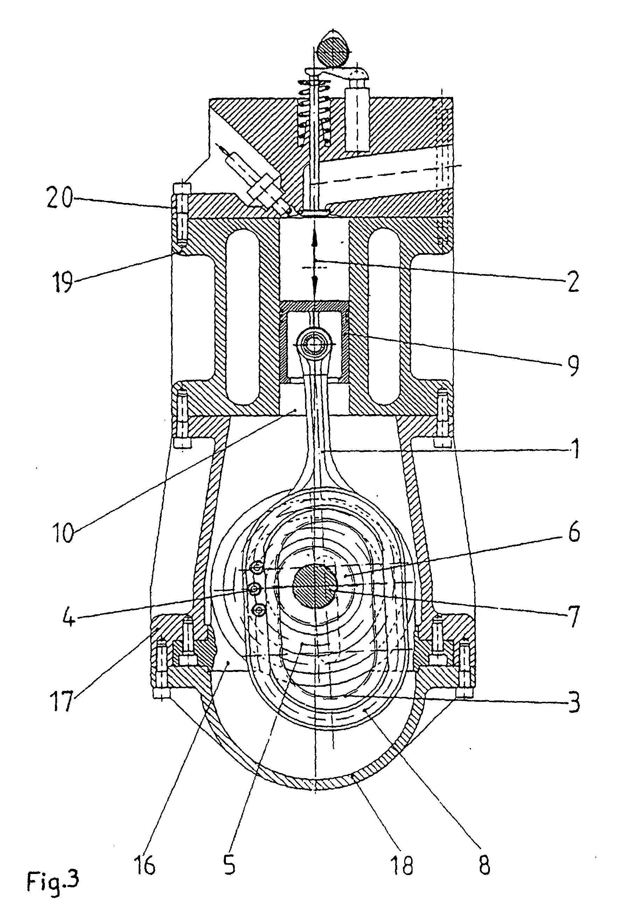

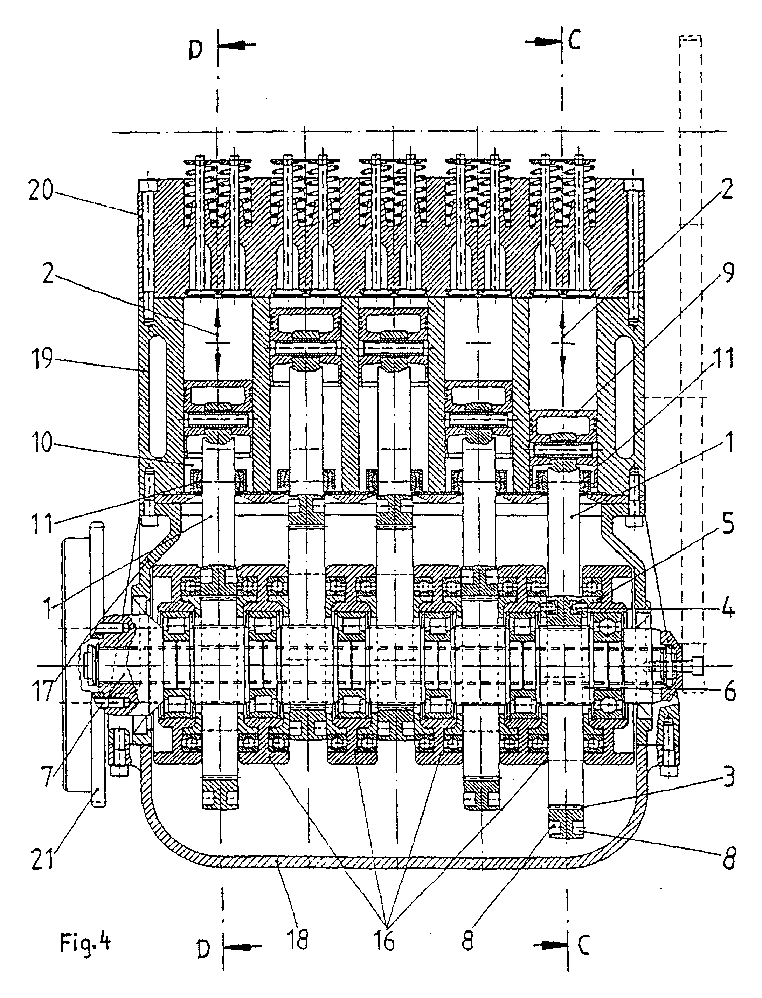

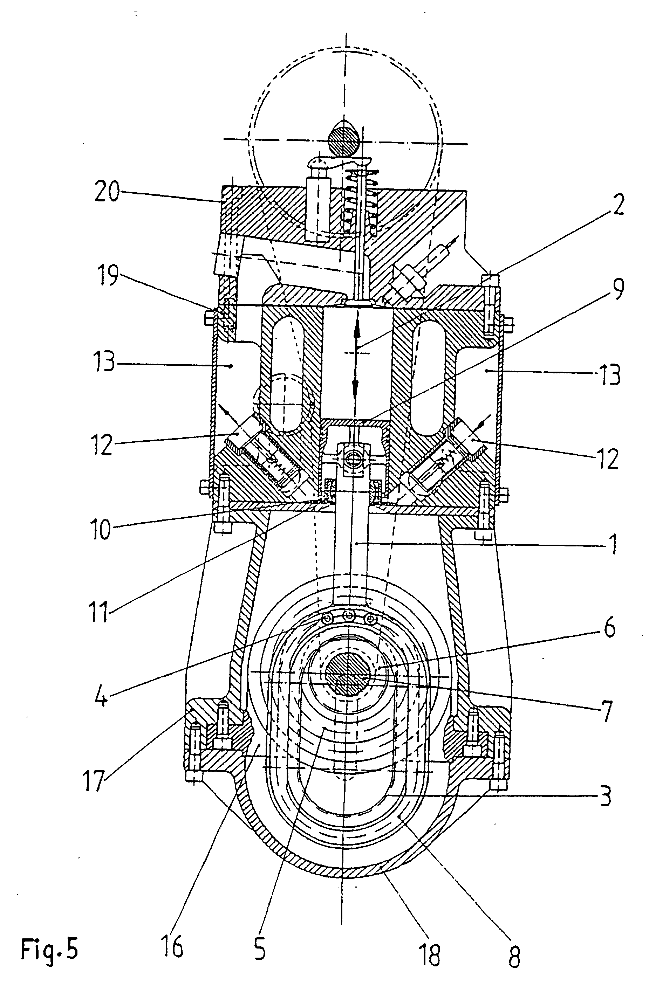

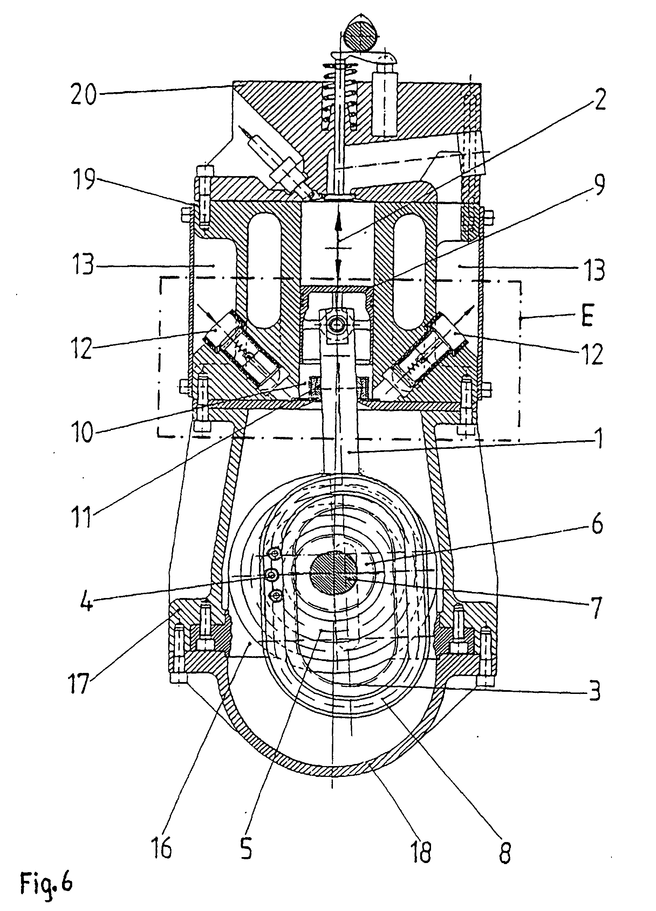

Die Fig. 4, 5, 6 und 8 zeigen eine Variante des Motors gemäß den Fig. 1 bis 3 mit Vorverdichtung der Verbrennungsluft. Die hier aufgezeigte Vorverdichtung, z.B. beim Viertakt-Motor, wird erst möglich durch die erfindungsgemäße, geringe Auslenkung des Pleuels 1, welche erst eine bewegliche Pleuelschaft-Abdichtung 11 zwischen Zylinder 10 und Motorwellengehäuse 17 ermöglicht. Hinzu kommt noch die günstige Lage und Gestaltung der selbsttätig arbeitenden Rückschlagventile 12 oder Rückschlag-Federblechlamellen für die angesaugte und komprimierte Luft. Vorteile bezüglich der Kanalführung der Frischluft bringen sicherlich die luftberuhigenden, am Motorblock abgeschotteten Luftsammelräume 13. Gleichzeitig verhindert die Pleuelschaft-Abdichtung 11 ein Eindringen der Verbrennungsgase in das Motorwellengehäuse 17 bzw. in das Ölbad.

Einzelheiten der beweglichen Pleuelschaft-Abdichtung 11 gehen aus der vergrößerten Darstellung gemäß Fig. 8 hervor.

Alle hier aufgezeigten, erfindungsgemäßen Neuerungen gelten nicht nur für Otto-Motoren, sondern auch für Diesel-Motoren sowohl im Viertakt- als auch im Zweitakt-Verfahren, wobei dis bisherigen, bekannten technischen Erkenntnisse, Verfahren und verbesserungen angewendet werden können.

Abschließend sei noch darauf hingewiesen, daß das Bezugszeichen 19 den Zylinderblock, das Bezugszeichen 20 den Zylinderkopf und das Bezugszeichen 21 die Schwungscheibe bezeichnen. Diese Positionen wurden in der vorstehenden Beschreibung nicht erläutert.

## Patentansprüche

1. Kurbeltriebloser Verbrennungsmotor mit wenigstens einem Zylinder (10), einem im Zylinder (10) für eine reziproke lineare Bewegung angeordneten Kolben (9), der mit einem auslenkbaren Pleuel (1) verbunden ist, wobei das Pleuel (1) an seinem auslenkbaren Ende ein Kraftübertragungsglied mit einer ovalen Innenverzahnung (3) aufweist, welche durch eine Führung um ein auf der Motorwelle (7) drehfest sitzendes zahnrad (6) zwangsgeführt ist, wobei das Zahnrad (6) einseitig mit der Innenverzahnung (3) kämmt und dadurch in Drehung versetzt wird, **dadurch gekennzeichnet, daß** das Kraftübertragungsglied parallel zur Innenverzahnung (3) eine geschlossene Führungsbahn (8) aufweist, in der drei Gleit- bzw. Rollkörper (4) laufen, die an einem konzentrisch zur Motorwelle (7) angeordneten, im Motorblock (16) kugelgelagerten Ring (5) gelagert sind.

2. Kurbeltriebloser Verbrennungsmotor nach Anspruch 1, **dadurch gekennzeichnet, daß** das Kraftübertragungsglied auf beiden Seiten je eine Führungsbahn (8) aufweist, in der jeweils drei Gleit- bzw. Rollkörper (4) laufen.

3. Kurbeltriebloser Verbrennungsmotor nach Anspruch 1 oder Anspruch 2, **dadurch gekennzeichnet, daß** unterhalb des Kolbens (9) im unteren Teil des Zylinders (10) eine bewegliche Pleuelschaft-Abdichtung (11) und selbsttätig arbeitende Rückschlagventile (12) oder Rückschlag-Federblechlamellen angeordnet sind, wodurch eine Frischluft-Vorverdichtung möglich ist und damit eine schnellere und ablaufgünstigere Zylinderfüllung mit Frischluft erzielbar ist.

## Claims

1. Internal combustion engine without crankshaft drive with at last one cylinder (10), one piston (9) arranged for reciprocal linear movement within the cylinder (10), which is linked to a connecting rod (1) capable of being deflected, where the connocting-rod (1) has a power transmission element at its deflectable end with oviform internal toothing (3), which is directed by a guide about a gear wheel (6) seated as a rotation-free fixture on the engine shaft (7), in which the gear wheel (6) meshes on one side with the internal toothing (3) and is thereby set in motion, **characterised in that** the power transmission element has, parallel to the interior toothing, a closed guide-way (8), in which three sliding or rolling bodies (4) run, which are carried on a ball-bearing ring (5) arranged in the engine block (16) coaxially to the engine shaft (7).

2. Internal combustion engine in accordance with Claim 1, **characterised in that** the power transmission element has on each of the two sides a guide-way in which the three sliding or rolling bodies (4) run respectively.

3. Internal combustion engine in accordance with Claim 1 or Claim 2, **characterised in that** a movable connecting-rod shank seal (11) and automatically operating non-return valves (12) or non-return spring steel leaves are arranged below the piston (9) in the lower part of the cylinder (10), such that fresh air precompression is possible and thus the cylinder can be filled with fresh air more quickly and easily.

## Revendications

1. Moteur thermique sans équipage mobile avec au moins un cylindre (10), dans lequel est disposé, pour un mouvement réciproque linéaire, un piston (9) qui est relié à une bielle pouvant être déviée, bielle (1), dont l'extrémité pouvant être déviée présente un élément de transmission de force avec une denture intérieure ovale (3) guidée par un guidage forcé, autour d'une roue dentée (6) disposée résistante à la torsion sur l'arbre du moteur (7), la roue dentée (6) étant en engrenage, d'un côté, avec la denture intérieure (3), de manière qu'elle soit entraînée en rotation, **caractérisé en ce que** l'élément de transmission de force présente, parallèle à la denture intérieure (3), une coulisse (8), dans laquelle se déplacent trois corps coulissants ou roulants (4) qui sont logés sur une bague (5) disposée concentrique par rapport à l'arbre moteur (7) et logée au moyen de roulements à billes dans le bloc moteur (16).

2. Moteur thermique sans équipage mobile suivant la revendication 1, **caractérisé en ce que** l'élément de transmission de force présente une coulisse (8) respectivement de chaque côté, dans laquelle se déplacent respectivement trois corps coulissants ou roulants (4).

3. Moteur thermique sans équipage mobile suivant la revendication 1 ou la revendication 2, caractérisé en ce qu'un élément d'étanchéité (11) du corps de bielle et des clapets de non retour à fonctionnement automatique (12) ou des lamelles en tôle élastique à ressorts sont disposés sous le piston (9), dans la partie inférieure du cylindre (10), ce qui permet une précompression de l'air frais et, par conséquent, un remplissage du cylindre en air frais plus rapide, donc plus avantageux pour le mécanisme.
